# FASCICULE DE BREVET EUROPEEN

(11) **EP 1 274 947 B1**
(45) Date de publication et mention de la délivrance du brevet: **19.10.2005**
(21) Numéro de dépôt: 01923764.3
(22) Date de dépôt: 09.04.2001
(51) Int. Cl.: F16B 12/20

(54) **DISPOSITIF D'ASSEMBLAGE POUR RELIER PAR SON BOUT UNE PIECE CONTRE L'UNE DES FACES D'UNE AUTRE PIECE**
VORRICHTUNG UM DAS ENDE EINES TEILS MIT DEN SEITEN EINES ANDEREN ZU VERBINDEN
ASSEMBLING DEVICE FOR CONNECTING BY ITS TIP ONE PART AGAINST ONE OF THE SURFACES OF ANOTHER PARTS

(30) Priorité: 17.04.2000 FR 0004940
(43) Date de publication de la demande: 15.01.2003
(73) Titulaire: Saunion, Maxime, 74440 Mieussy (FR)
(72) Inventeur: Saunion, Maxime, 74440 Mieussy (FR)
(74) Mandataire: Hecké, Gérard
(86) Numéro de dépôt international: PCT/FR2001/001076
(87) Numéro de publication internationale: WO 2001/079712

(56) Documents cités:
- DE-A- 3 831 755
- DE-C- 802 529
- GB-A- 1 214 013
- US-A- 3 730 568

## Description

### Domaine technique de l'invention

L'invention est du domaine de l'assemblage mécanique entre deux pièces, et elle a pour objet un dispositif d'assemblage pour relier par son bout une pièce en appui contre l'une des faces d'une autre pièce, en vue notamment de former, à partir de profilés, une ossature participante d'un meuble.

On connaît dans le domaine de la menuiserie un mode d'assemblage par emboîtement dit "à tenon et mortaise" selon lequel deux profilés sont assemblés l'un à l'autre par introduction d'un tenon ménagé en bout d'un profilé à l'intérieur d'une mortaise ménagée dans la tranche d'un autre profilé. L'emboîtement ainsi réalisé est verrouillé par chevillage, c'est à dire par passage en force d'une cheville conjointement à travers les deux profilés assemblés, ou encore par collage entre les surfaces des profilés en contact les unes avec les autres.

L'avantage de ce type d'assemblage, par rapport à d'autres modes d'assemblage tels que par vissage notamment, réside dans son caractère robuste et durable, mais pose les inconvénients d'être d'une mise en oeuvre délicate nécessitant l'intervention d'un spécialiste, de ne pas permettre le démontage des profilés assemblés, sinon à risquer leur détérioration, et de ce fait d'accroître la difficulté de transport du meuble, et enfin de ne pas offrir, le cas échéant, la possibilité d'ajuster l'assemblage des profilés entre eux, notamment lors de l'installation du meuble sur un site différent de celui où les profilés ont été initialement assemblés, ou encore au fil du temps.

Le document GB-1214013 décrit le préambule de la revendication 1.

### Objet de l'invention

Le but de la présente invention est de proposer un dispositif d'assemblage pour relier de manière robuste une pièce par son bout en appui contre l'une des faces d'une autre pièce, qui remédie aux inconvénients susvisés, et notamment qui permette un démontage rapide des profilés assemblés ainsi que la faculté d'intervenir ultérieurement sur le serrage de l'assemblage obtenu, tout en conservant un caractère d'assemblage traditionnel.

Selon l'invention, ce but est atteint par les revendications annexées.

Le dispositif de la présente invention est un dispositif d'assemblage mécanique entre deux pièces, de bois, de métal ou de résine notamment, pour relier par son bout l'une des dites pièces, dite de bout, contre l'une des faces de l'autre pièce, dite de réception. On comprendra que la pièce de bout peut-être rapportée soit contre la tranche de la pièce de réception, pour un assemblage des deux pièces entre elles suivant une orientation concourante, soit contre le bout de la pièce de réception pour un aboutement des pièces l'une à l'autre. Ce dispositif comprend des moyens d'assemblage l'un à l'autre de deux organes coopérant qui sont destinés à être au moins partiellement logés à l'intérieur d'un évidement d'une pièce respective à laquelle ils sont solidarisables par des organes de liaison, les organes coopérant étant respectivement dits organe de bout et organe de réception.

Les moyens d'assemblage l'un à l'autre de l'organe de bout et de l'organe de réception sont des moyens de crochetage sous tension entre un crochet équipant l'organe de bout et un organe de saisie équipant l'organe de réception. Le crochet est relié à l'organe de bout par l'intermédiaire de moyens de mise sous tension du crochetage entre deux positions d'ouverture et de verrouillage, pour, le crochet étant en prise sur l'organe de saisie, rapprocher l'un de l'autre les organes de liaison, avec la pièce relative, de l'organe de bout et de l'organe de réception. Ces dispositions sont telles que lorsque l'organe de bout et l'organe de réception sont solidarisés à la pièce relative, la pièce de bout et la pièce de réception sont disposées à faible distance l'une de l'autre en position d'ouverture, et sont en appui rigide l'une contre l'autre en position de verrouillage. On notera qu'il est prévu que l'évidement de la pièce de bout est ouvert sur l'une de ses faces latérales pour autoriser un accès depuis l'extérieur aux moyens de mise sous tension du crochetage par l'utilisateur.

Plus particulièrement, le but de l'invention est atteint par le fait que les moyens de crochetage sous tension comprennent des moyens de réglage de la tension exercée par le crochet sur l'organe de saisie, moyens de réglage qui sont accessibles depuis l'extérieur de la pièce de bout, lorsqu'elle loge l'organe de bout, à travers l'évidement qui reçoit ce dernier.

Selon une forme préférée de réalisation de l'invention, les moyens de crochetage sous tension sont constitués par une attache à genouillère à passage de point dur, qui présente l'avantage d'offrir une stabilité du crochetage verrouillé obtenu, le réglage de la tension du crochetage s'effectuant par un rapprochement ou inversement un éloignement du crochet par rapport à l'organe de liaison de l'organe de bout avec la pièce de bout.

On relèvera l'avantage, en premier lieu de prévoir de ménager dans la pièce de bout un évidement borgne débouchant sur l'une des faces latérales de la pièce de bout, afin d'une part de faire reposer en son fond l'organe de bout, et d'autre part de permettre une émergence d'un levier participant de l'attache à genouillère, en vue de sa préhension aisée par l'utilisateur en position d'ouverture des moyens de crochetage, et en deuxième lieu de ménager dans la pièce de réception un évidement médian dans son épaisseur pour recevoir l'organe de réception, celui-ci émergeant hors de l'évidement de la pièce de réception pour faciliter la mise en place du crochet sur l'organe de saisie et étant prévu pour pénétrer à l'intérieur de l'évidement de la pièce de bout dans le prolongement de l'organe de bout. On comprendra que selon une variante dans laquelle l'organe de réception est conformé en clavette pourvu d'un orifice pour le passage d'une cheville de liaison de l'organe de réception avec la pièce de réception, l'évidement de la pièce de réception peut être conformé à la manière de celui susvisé de l'évidement de la pièce de bout.

On notera ainsi que selon un aspect de l'invention relevant d'une forme particulière de réalisation, l'agencement et la conformation des évidements de la pièce de bout et de la pièce de réception, et/ou l'organisation et la disposition de l'organe de bout et de l'organe de réception respectivement à l'intérieur des évidements sont participant du dispositif de l'invention.

L'un quelconque au moins des moyens de liaison entre l'organe de bout et l'organe de réception avec respectivement la pièce de bout et la pièce de réception sont des moyens de liaison réversibles, pour permettre le cas échéant d'intervenir facilement sur le dispositif en vue de sa maintenance ou du remplacement de l'un quelconque des éléments qui le composent.

Les moyens de liaison entre l'organe de bout et la pièce de bout sont constitués par une conformation complémentaire au moins partielle entre l'organe de bout et l'évidement de la pièce de bout pour leur emboîtement en contact étroit, la conformation comprenant au moins un débord formant butée à l'encontre de la tension exercée par les moyens de crochetage. On notera que le débord n'est qu'une forme préférée de réalisation de moyens généraux de retenue de l'organe de bout à l'intérieur de la pièce de bout à l'encontre de la tension exercée par les moyens de crochetage.

Il est souhaité que les moyens de liaison de l'organe de réception avec la pièce de réception comprennent une cheville, pour conférer au dispositif un caractère traditionnel. C'est pourquoi, la réversibilité des moyens de liaison de l'organe de réception avec la pièce de réception doit permettre une liaison robuste entre eux, exempte de jeu notamment, sans pour autant mettre en oeuvre un passage en force de la cheville, inopportune et souvent préjudiciable pour la structure des organes traversés par la cheville.

Aussi, les moyens de liaison entre la pièce de réception et l'organe de réception comprenant une cheville les traversant conjointement, la cheville s'étend à travers un fût de l'organe de réception qui est organisé en mâchoires d'une pince. Les branches de la pince sont articulées sur l'organe de réception entre l'extrémité distale des branches qui supporte une mâchoire respective et l'extrémité proximale des branches qui comporte des moyens pour leur manoeuvre, l'extrémité proximale des branches étant disposée à une partie de l'organe de réception prévue pour émerger hors de l'évidement de la pièce de réception qui le loge. Ces dispositions sont telles que les mâchoires puissent, soit être repliées pour l'introduction de l'organe de réception dans le logement correspondant de la pièce de réception sans faire obstacle au passage entre-elles de la cheville, soit être déployées pour conformer le fût autour de la cheville, fût duquel elles sont participantes.

On notera que selon diverses variantes, le repliement des mâchoires est soit positif, c'est à dire manoeuvré par l'utilisateur, soit spontané, c'est à dire manoeuvré par un organe élastique, à l'encontre de la tension duquel organe élastique l'utilisateur manoeuvre les branches pour le repliement des mâchoires lors de la mise en place de l'organe de réception à l'intérieur de l'évidement de la pièce de réception.

### Description sommaire des dessins

La présente invention sera mieux comprise et des détails en relevant apparaîtront, à la description qui va en être faite de formes préférées de réalisation, en relation avec les figures des planches annexées, dans lesquelles :
les fig.1 et fig.2 sont des élévations en coupe longitudinale respectivement en position d'ouverture et en position de verrouillage, d'un dispositif selon une première forme de réalisation de l'invention,
les fig.3 et fig.4 sont des représentations en perspective, respectivement en vue éclatée et en vue assemblée, de l'organe de bout participant du dispositif représenté sur les fig.1 et fig.2,
la fig.5 est une vue en perspective d'un organe de réception participant du dispositif représenté sur les fig.1 et fig.2,
les fig.6 et fig.7 sont des schémas illustrant, respectivement en position repliée et en position déployée les mâchoires d'une pince équipant l'organe de réception du dispositif représenté sur la fig.5,
les fig.8 et fig.9 sont des élévations en coupe longitudinale respectivement en position d'ouverture et en position de verrouillage, d'un dispositif selon une deuxième forme de réalisation de l'invention,
la fig.10 est une vue en perspective d'un organe de réception participant du dispositif représenté sur les fig.8 et fig.9,
les fig.11 et fig.12 sont des vues schématiques illustrant, respectivement en position repliée et en position déployée les mâchoires d'une pince équipant l'organe de réception du dispositif représenté sur la fig.10.
la fig.13 est une vue en perspective éclatée d'un dispositif d'assemblage selon une autre forme de réalisation de l'invention, l'organe de bout n'étant pas représenté,
la fig.14 est une vue en perspective éclatée d'une pièce de réception et d'un organe de réception selon une autre forme de réalisation de l'invention.

### Description de différents modes de réalisations

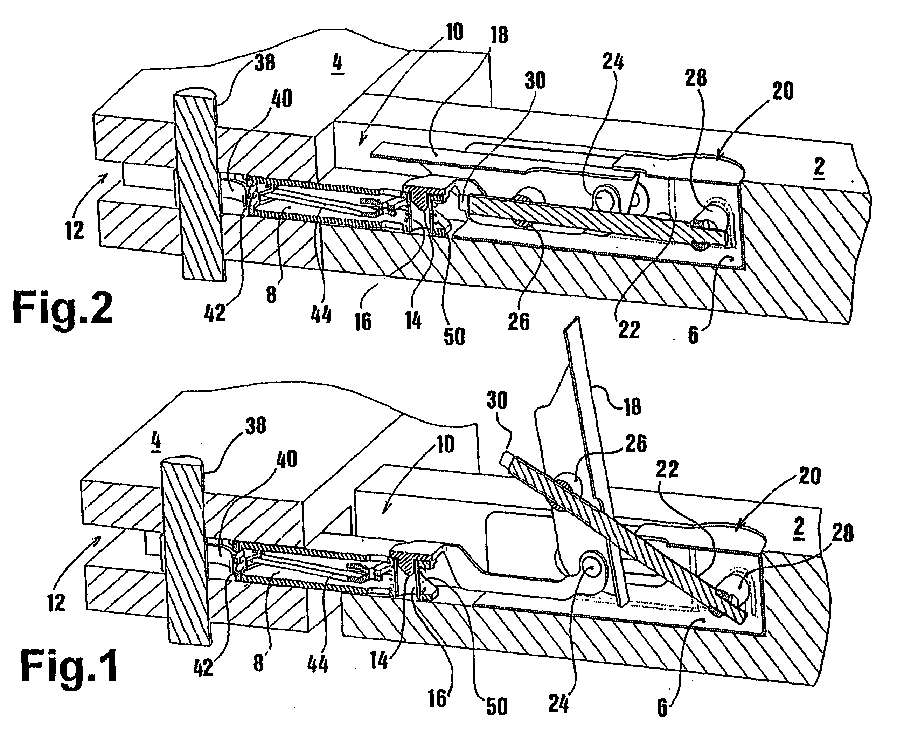

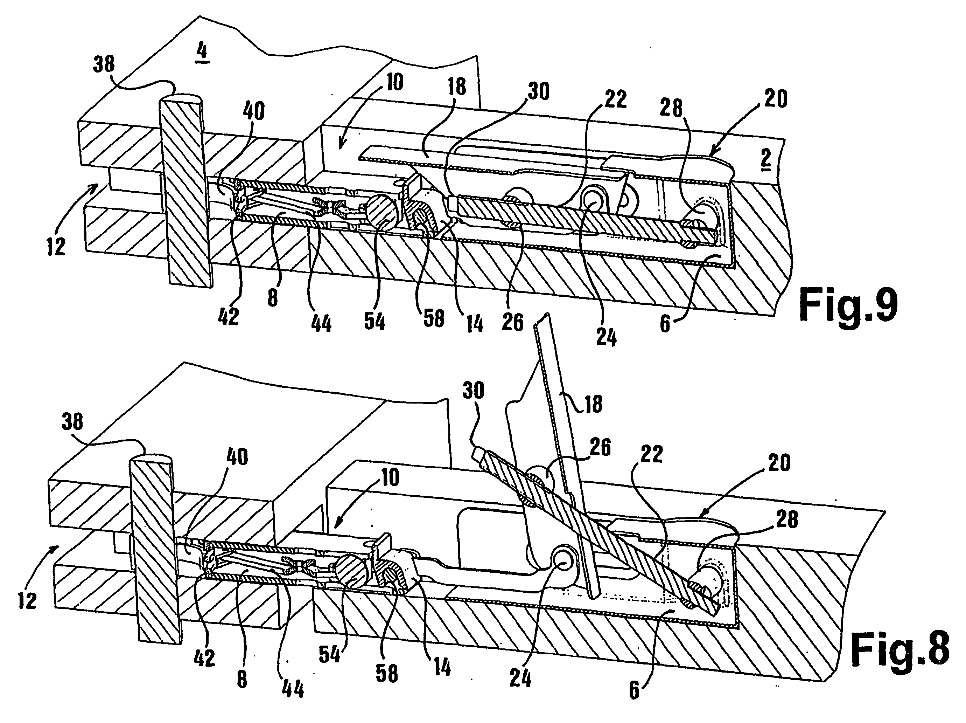

Sur les figures, un dispositif de l'invention est destiné à raccorder mécaniquement le bout d'une première pièce 2 contre la tranche d'une deuxième pièce 4. Ce dispositif comprend deux organes, 6 et 8, coopérant par crochetage sous tension, prévus pour être logés dans un évidement respectif 10 et 12 de la pièce de bout 2 pour l'un 6, et de la pièce de réception 4 pour l'autre 8, auxquelles pièces 2 et 4 ils sont solidarisables. L'organe de bout 6 comporte un crochet 14 prévu pour avoir prise sur un organe de saisie 16 ou 58 de manière à rapprocher l'une de l'autre la pièce de bout 2 et la pièce de réception 4 entre une position d'ouverture (fig.1 ou fig.8) et une position de verrouillage (fig.2 ou fig.9). On remarquera que l'évidement 10 de la pièce de bout 2 recevant l'organe de bout 6 est un évidement borgne ouvert sur l'une des faces latérales de la pièce de bout 2, pour permettre l'accès depuis l'extérieur à un organe 18 de manoeuvre du crochet 14. L'organe de bout 6 et l'évidement 10 qui le reçoit ont une forme complémentaire pour leur emboîtement, qui comprend une partie débordante 20 constituant une butée à l'encontre de la tension exercée par les moyens de crochetage 14,18,22.

Sur les exemples de réalisation illustrés, les moyens de crochetage sous tension sont constitués par une attache à genouillère 14,18,22 comprenant le crochet 14, qui est articulé 24 sur un levier de manoeuvre 18. Ce levier 18 est lui-même articulé sur un doigt 24 monté coulissant le long d'une paroi latérale de l'organe de bout 6, doigt 24 constituant en outre l'axe d'articulation du crochet 14 sur le levier 18. Par ailleurs, le levier 18 est attaché à l'organe de bout 6 par l'intermédiaire d'une tringle 22 articulée 26,28 au voisinage de ses extrémités respectivement sur le levier 18 et sur l'organe de bout 6. On notera que la manoeuvre du levier 18 est notamment opérée depuis l'extérieur de la pièce de bout 2 par l'utilisateur, entre la position d'ouverture dans laquelle le levier 18 est émergeant en étant orienté transversalement à la pièce de bout 2 et la position de verrouillage dans laquelle le levier 18 est rabattu contre le crochet 14 en étant logé dans l'évidement 10 de la pièce de bout 2 recevant l'organe de bout 6. On relèvera que l'agencement susvisé entre le crochet 14, le levier 18 et la tringle 22 confère au crochet une mobilité en translation suivant une orientation parallèle correspondante à celle générale de la pièce de bout 2, grâce à quoi les tensions du crochetage sont absorbées corrélativement par la pièce de bout 2 et la pièce de réception 4 suivant des orientations correspondantes à leur plan général. Selon une variante non illustrée, les moyens de crochetage peuvent comprendre un organe élastique tel que ressort.

Le dispositif de l'invention est avantageusement équipé de moyens de réglage 22,26,30 de la tension exercée par les moyens de crochetage 14,18,22, constitués sur les exemples illustrés par des moyens de réglage 22,26,30 de la longueur de la tringle 22 entre ses axes d'articulation 26,28 respectivement sur le levier 18 et sur l'organe de bout 6. Notamment, la tringle 22 étant articulée sur l'un quelconque des éléments comprenant le levier 18 et de l'organe de bout 6 par l'intermédiaire d'une noix filetée 26 en son travers, et sur l'autre élément par l'intermédiaire d'une noix 28 recevant en son travers la tringle 22 en contact coulissant, les moyens de réglage de la longueur de la tringle sont constitués par la noix filetée 26 qui reçoit une partie axiale filetée correspondante de la tringle 22, et par un organe de préhension 30 de la tringle 22 par l'utilisateur pour son entraînement en rotation sur elle-même.

Ces dispositions sont telles que, l'organe de bout 6 étant logé dans l'évidement 10 de la pièce de bout 2 et l'organe de préhension 30 de la tringle 22 étant disposé en bout de cette dernière au-delà de l'axe d'articulation 26 de la tringle 22 sur le levier 18, la préhension de la tringle 22 par l'utilisateur est possible depuis l'extérieur de la pièce de bout 6 lorsque le levier 18 est en position d'ouverture.

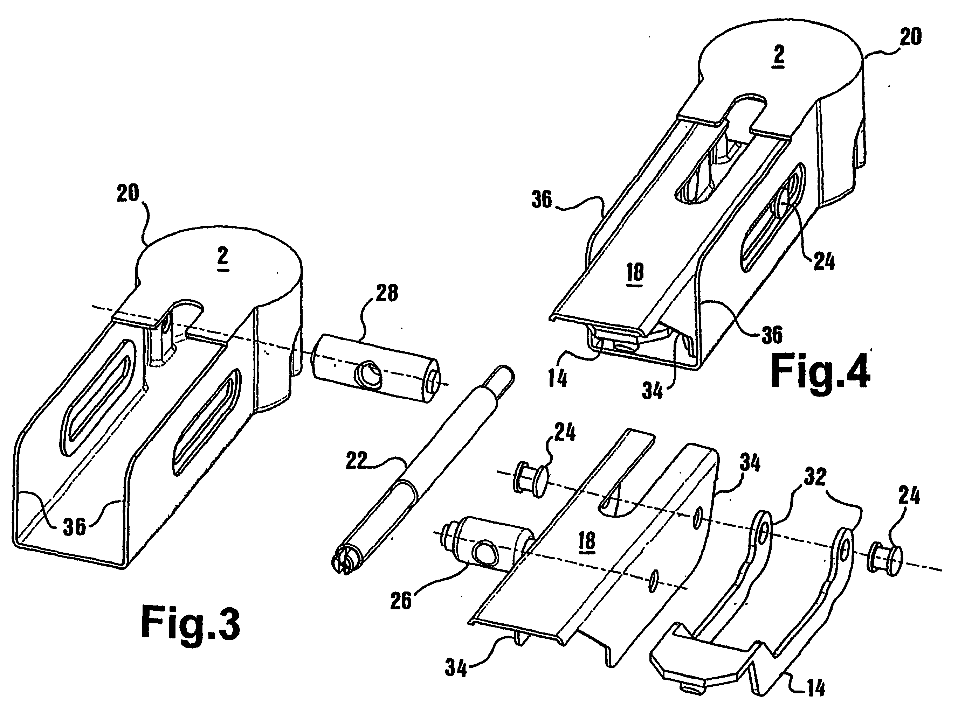

En se reportant plus particulièrement à la fig.3, on remarquera que selon les formes de réalisation illustrées, l'organe de bout 6 comporte une section en U ouverte vers le débouché de l'évidement 10 de la pièce de bout 2 qui le loge, entre les ailes 36 duquel U s'étendent le crochet 14 et le levier 18. Ce dernier possède lui-même une section en U, et l'extrémité du crochet 14 par laquelle ce dernier est articulé sur l'organe de bout 6 est agencée en chape en étant coiffée par le levier 18. L'axe d'articulation 24 du levier 18 et du crochet 14 sur l'organe de bout 6 est composé de deux tourillons élémentaires respectivement affectés à une branche respective 32 de la chape formant l'extrémité relative du crochet 14, lesdites branches 32 étant articulées par l'intermédiaire des tourillons sur une aile 34 respective du levier 18.

Selon une forme particulière de réalisation, non représentée sur les figures, le levier 18 comporte sur chacune de ses ailes 34 une double paroi supportant un tourillon élémentaire 24 respectif, entre lesquelles de chacune des doubles parois est logée une branche respective 32 de la chape formant l'extrémité relative du levier 18, de telle sorte que chaque tourillon 24 soit maintenu à chacune de ses extrémités par le levier 18 au moyen des doubles parois.

On remarquera que les moyens de liaison pour la solidarisation de l'organe de bout 6 et de l'organe de réception 8 avec les pièces 2 et 4, sont de préférence réversibles.

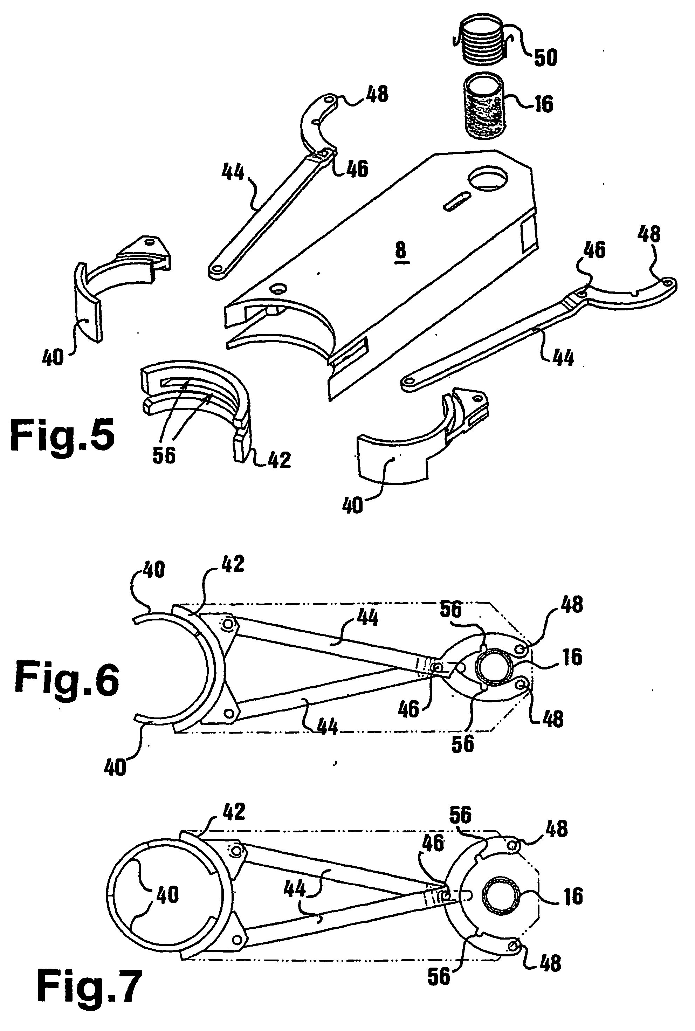

Plus particulièrement, et en se reportant aux fig.5 à 7, et fig.10 à 12, concernant les moyens de liaison de l'organe de réception 8 avec la pièce de réception 4, ceux-ci mettent en oeuvre une cheville 38 les traversant. Cette cheville 38 s'étend à travers un fût 40,42 de l'organe de réception 8 qui est organisé en mâchoires 40 d'une pince, dont les branches 44 sont articulées 46 sur l'organe de réception 8, et sont équipées d'organes 48 ou 54 pour leur manoeuvre, accessibles depuis une partie de l'organe de réception 8 émergeante de la pièce de réception 4.

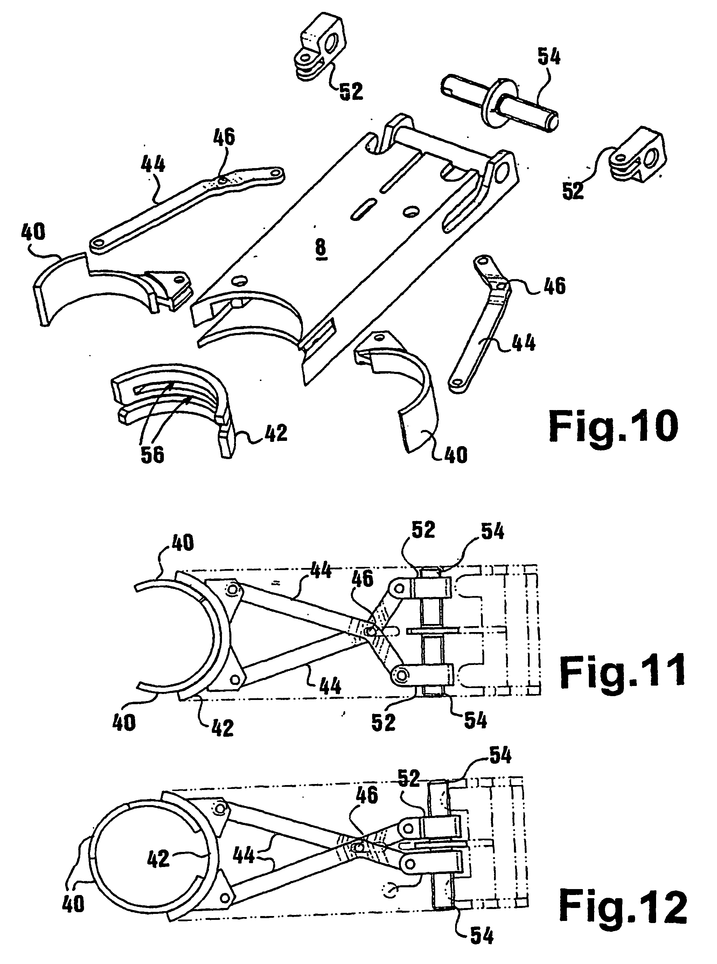

On relèvera, notamment sur les fig.10 à 12 d'une part, et fig.5 à 7 d'autre part, que selon un aspect particulier de la présente invention, les mâchoires 40 sont guidées entre une position repliée, dans laquelle la cheville 38 est prévue pour être latéralement introduite entre les mâchoires 40 lors de la mise en place de l'organe de réception 8 dans l'évidement 12 y afférent, et une position déployée dans laquelle il est prévu que les mâchoires 40 entourent en contact étroit la cheville 38, par l'intermédiaire d'un organe 42 conformé en portion de cylindre, dit guide. Ce dernier est participant du fût 40,42 et comporte des organes de guidage en forme de lumières 56 le long desquelles circulent les mâchoires 40 suivant un trajet en arc de cercle centré sur l'axe du fût 40,42, de telle sorte que ce dernier soit conformé en cylindre en position déployée des mâchoires 40, en étant composé par l'ensemble comprenant les mâchoires 40 et le guide 42.

Selon une première forme de réalisation des moyens de manoeuvre des branches 44, illustrée sur les fig.1 et 2, et sur les fig.5 à 7, ceux-ci comprennent un organe élastique 50 de maintien spontané des branches en position déployée des mâchoires 40, et des moyens 48 de préhension des extrémités proximales des branches 44 en vue dé leur manoeuvre par l'utilisateur à l'encontre de la tension exercée par l'organe élastique 50 sur les branches 44. Le repliement des mâchoires 40 est provoqué soit par l'utilisateur lors de la mise en place de l'organe de réception 8 dans l'évidement 12 de la pièce de réception 4, soit spontanément avec la mise en conformation du fût 40,42.

Selon une deuxième forme de réalisation des moyens de manoeuvre des branches, illustrée sur les fig.3 et 4 et sur les fig.10 à 12, ceux-ci sont constitués par une vis 54 montée tournante sur l'organe de réception 8, vis 54 qui reçoit de manière coopérante les extrémités proximales 52 des branches 44 en vue alternativement de leur rapprochement et de leur éloignement l'une de l'autre, de telle sorte qu'une manoeuvre de la vis 54 provoque le déploiement et le repliement des mâchoires 40.

On remarquera que selon les formes de réalisation susvisées des moyens de manoeuvre des branches 44, diverses variantes sont proposées pour l'agencement entre le crochet 14 et l'organe de saisie 16 ou 58. Selon une première variante correspondante à la première forme de réalisation des moyens de manoeuvre 48,50 des branches 44, l'organe de saisie 16 est formé d'un doigt vertical évidé pour recevoir le crochet 14, autour duquel doigt 16 est enroulé un ressort de torsion 50, qui constitue l'organe élastique et qui prend appui 56 sur l'une et l'autre des branches 44. Selon une deuxième variante, l'organe de prise est conformé en doigt 58 à extension transversale sur lequel prend prise le crochet 14.

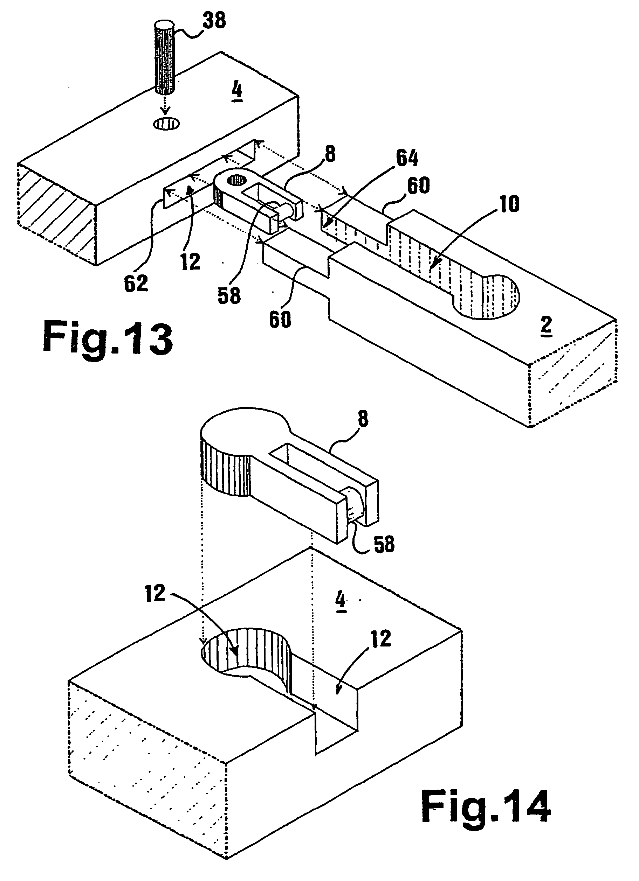

Selon une la particulière de réalisation représentée sur la fig.13, visant à compléter la robustesse de l'assemblage obtenu entre la pièce de bout 2 et la pièce de réception 4, celles-ci sont agencées en tenon 60, ménagé en bout de la pièce de bout 2, et en mortaise 62, ménagée dans la pièce de réception 4. Selon cette forme de réalisation, l'évidement 10 logeant l'organe de bout 2 est ménagé en amont du tenon 60, ce dernier comportant une lumière longitudinale 64, pour le passage de l'organe de réception 8. Cette lumière 64 subdivise le tenon 60 en deux parties latérales entre lesquelles est prévu d'être disposé l'organe de réception 8 lors de l'assemblage entre la pièce de bout 2 et la pièce de réception 4. On comprendra que l'évidement 12 de la pièce de réception 4 logeant l'organe de réception 8 est constitué par la mortaise 62, à l'intérieur de laquelle sont prévues d'être introduites les parties du tenon 60, celles-ci constituant des entretoises entre l'organe de réception 8 et les faces latérales internes de la mortaise 62.

Sur les variantes illustrées sur les fig.13 et 14, la pièce de réception 8 est formée d'une clavette organisée en chape pour recevoir entre ses pattes un doigt cylindrique 58 constituant l'organe de prise.

On remarquera par ailleurs sur la variante de la fig.13 que la liaison entre l'organe de réception 8 et la pièce de réception 4 s'effectue au moyen d'une cheville 38, qui les traverse à la manière courante dans le domaine du chevillage.

On remarquera enfin sur la variante de la fig.14 que l'évidement 12 de la pièce de réception 4 et l'organe de réception 8, comportent pour leur liaison l'une à l'autre des conformations complémentaires semblables à celle de l'évidement 10 de la pièce de bout 2 et de l'organe de bout 6 illustrés sur les figures précédentes.

Bien que le levier 22 soit dirigé selon une direction oblique, la genouillère exerce en permanence lors du serrage, une traction horizontale à l'intérieur de la mortaise.

## Revendications

1. Dispositif d'assemblage mécanique entre deux pièces (2, 4), pour relier par son bout l'une (2) desdites pièces, dite de bout, contre l'une des faces de l'autre pièce (4), dite de réception, ledit dispositif comprenant :
- deux organes coopérant (6, 8) destinés à être au moins partiellement logés à l'intérieur d'un évidement (10, 12) d'une pièce respective, à laquelle ils sont solidarisables par des organes de liaison (38, 40, 42 ; 10, 20), les organes coopérant étant respectivement dits organe de bout (6) et organe de réception (8),
- des moyens de crochetage sous tension entre un crochet (14) équipant l'organe de bout (6) et un organe de saisie (16,58) équipant l'organe de réception (8),
- le crochet (14) est relié à l'organe de bout (6) par l'intermédiaire de moyens (18,22) de mise sous tension du crochetage entre deux positions respectivement d'ouverture et de verrouillage, pour, le crochet (14) étant en prise sur l'organe de saisie (16,58), rapprocher l'une de l'autre la pièce de l'organe de bout (6) et de l'organe de réception (8),
- l'organe de bout (6) et l'organe de réception (8) étant solidarisés à la pièce (2,4), la pièce de bout (2) et la pièce de réception (4) sont disposées à faible distance l'une de l'autre en position d'ouverture et sont en appui rigide l'une contre l'autre en position de verrouillage, l'évidement (10) de la pièce de bout (2) étant ouvert sur l'une de ses faces latérales pour autoriser un accès depuis l'extérieur aux moyens (18) de mise sous tension du crochetage par l'utilisateur,
dispositif **caractérisé en ce que** les moyens de crochetage sous tension comprennent des moyens (22,28,30) de réglage de la tension exercée par le crochet (14) sur l'organe de saisie (16,58), lesdits moyens de réglage étant accessibles depuis l'extérieur de la pièce de bout (2) lorsqu'elle loge l'organe de bout (6) à travers l'évidement (10) qui reçoit ce dernier.

2. Dispositif d'assemblage selon la revendication 1, **caractérisé en ce que** les moyens de crochetage sous tension sont constitués par une attache à genouillère comprenant le crochet (14), lequel est articulé (24) sur un levier (18) de manoeuvre, lui-même d'une part articulé (24) sur un doigt monté coulissant le long d'une paroi latérale de l'organe de bout (6) et d'autre part attaché à ce dernier (6) par l'intermédiaire d'une tringle (22) articulée (26,28) au voisinage de ses extrémités respectivement sur le levier (18) et sur l'organe de bout (6).

3. Dispositif selon l'une des revendications 1 et 2, **caractérisé en ce que** les moyens de réglage des moyens de crochetage sous tension sont constitués par des moyens de réglage (22,30,28) de la longueur de la tringle (22) entre ses axes (26,28) d'articulation respectivement sur le levier (14) et sur l'organe de bout (6).

4. Dispositif selon la revendication 3, **caractérisé en ce que** :
- la tringle (22) est articulée sur l'un quelconque des éléments comprenant le levier (18) et de l'organe de bout (6) par l'intermédiaire d'une noix filetée (26) en son travers et sur l'autre élément par l'intermédiaire d'une noix (28) recevant en son travers la tringle (22) en contact coulissant,
- les moyens de réglage de la longueur de la tringle (22) sont constitués par la noix filetée (26) qui reçoit une partie axiale filetée correspondante de la tringle (22), et par un organe (30) de préhension de la tringle (22) par l'utilisateur pour son entraînement en rotation sur elle-même,
- l'organe de bout (6) logé dans l'évidement (10) de la pièce de bout (2) et l'organe (30) de préhension de la tringle (22), est disposé en bout de cette dernière au-delà de l'axe d'articulation (26) de la tringle (22) sur le levier (18), la préhension de la tringle (22) par l'utilisateur étant possible depuis l'extérieur de la pièce de bout (2) lorsque le levier (18) est en position d'ouverture.

5. Dispositif selon l'une quelconque des revendications précédentes, **caractérisé en ce que** les moyens de liaison entre l'organe de bout (6) et la pièce de bout (2) sont constitués par une conformation complémentaire au moins partielle entre l'organe de bout (6) et l'évidement (10) de la pièce de bout (2) pour leur emboîtement en contact étroit, conformation qui comprend au moins un débord (20) formant butée à l'encontre de la tension exercée par les moyens de crochetage (14,16,58).

6. Dispositif selon l'une quelconque des revendications précédentes, **caractérisé en ce que**, les moyens de liaison entre la pièce de réception (4) et l'organe de réception (8) comprend une cheville (38) les traversant conjointement, la cheville (38) s'étendant à travers un fût (40,42) de l'organe de réception (8) qui est organisé en mâchoires (40) d'une pince, dont les branches (44) sont articulées (46) sur l'organe de réception (8) entre l'extrémité distale des branches (44) qui supporte une mâchoire respective (40) et l'extrémité proximale des branches (44) comportant des moyens (48,50,54) pour leur manoeuvre, l'extrémité proximale des branches (44) étant disposée à une partie de l'organe de réception (8) prévue pour émerger hors de l'évidement (12) de la pièce de réception (4) qui le loge, de telle sorte que, les mâchoires (40) puissent, soit être repliées pour l'introduction de l'organe de réception (8) dans le logement (12) correspondant de la pièce de réception (4) sans faire obstacle au passage entre-elles de la cheville (38), soit être déployées pour conformer le fût (40,42) autour de la cheville (38).

7. Dispositif selon la revendication 6, **caractérisé en ce que** les mâchoires (40) sont guidées entre la position repliée et la position déployée par l'intermédiaire d'un organe (42) conformé en portion de cylindre, dit guide, qui est participant du fût (40,42) et qui comporte des organes de guidage (56) le long desquels circulent les mâchoires (40) suivant un trajet en arc de cercle centré sur l'axe du fût (40,42), de telle sorte que le fût (40,42) soit conformé en cylindre en position déployée des mâchoires (40) en étant composé par l'ensemble comprenant les mâchoires (40) et le guide (42).

8. Dispositif selon la revendication 7, **caractérisé en ce que** les moyens de manoeuvre des branches (44) sont constitués par une vis (54) montée tournante sur l'organe de réception (4), vis qui reçoit de manière coopérante les extrémités proximales (52) des branches (44) en vue, alternativement, de leur rapprochement et de leur éloignement l'une de l'autre, de telle sorte qu'une manoeuvre de la vis (54) provoque le repliement et le déploiement des mâchoires (40,42).

9. Dispositif selon la revendication 7, **caractérisé en ce que** les moyens de manoeuvre des branches (44) comprennent un organe élastique (50) de maintien spontané des branches (44) en position déployée des mâchoires (40), et des moyens (48) de préhension des extrémités proximales des branches (44) en vue de leur manoeuvre par l'utilisateur à l'encontre de la tension exercée par l'organe élastique (50) sur les branches (44), de telle sorte que le repliement des mâchoires (40) soit provoqué par l'utilisateur lors de la mise en place de l'organe de réception (8) dans l'évidement (12) de la pièce de réception (4), et que le déploiement des mâchoires (40) soit spontané.

## Claims

1. Mechanical assembly device between two parts (2, 4) for connecting by its end one (2) of said parts, called the end part, against one of the faces of the other part (4), called the receiving part, said device comprising:
- two co-operating members (6, 8) designed to be at least partly housed inside a recess (10, 12) of a respective part whereto they are able to be secured by connecting means (38, 40, 42; 10, 20), the co-operating members being respectively called the end member (6) and the receiving member (8),
- latching means under tension between a latch (14) equipping the end member (6) and a gripping member (16, 58) equipping the receiving member (8),
- the latch (14) is connected to the end member (6) by means (18, 22) for tensioning the latching system between two positions respectively an open position and a latched position, to move the part of the end member (6) and of the receiving member (8) towards one another, the latch (14) being engaged on the gripping member (16,58),
- the end member (6) and the receiving member (8) being secured to the part (2, 4), the end part (2) and the receiving part (4) are arranged at a small distance from one another in the open position and are pressing rigidly against one another in the latched position, the recess (10) of the end part (2) being open on one of its side faces to allow access from the outside to the means (18) for tensioning the latching system by user,
device **characterized in that** the latching means under tension comprise adjustment means (22, 28, 30) for adjusting the tension exerted by the latch (14) on the gripping member (16, 58), said adjustment means being accessible from the outside of the end part (2) when it houses the end member (6) via the recess (10) which receives the latter.

2. Assembly device according to claim 1, **characterized in that** the latching means under tension are formed by a toggle attachment comprising the latch (14) which is articulated on an operating lever (18) itself on the one hand articulated (24) on a finger mounted sliding along a side wall of the end member (6) and on the other hand attached to the latter (6) by means of a rod (22) articulated (26, 28) near its ends respectively on the lever (18) and on the end member (6).

3. Device according to one of the claims 1 and 2, **characterized in that** the means for adjusting the latching means under tension are formed by means (22, 30, 28) for adjusting the length of the rod (22) between its articulation axes (26, 28) respectively on the lever (14) and on the end member (6).

4. Device according to claim 3, **characterized in that**:
- the rod (22) is articulated on any one of the elements comprising the lever (18) and the end member (6) by means of a crosswise threaded nut (26) and on the other element by means of a nut (28) receiving the rod (22) crosswise as a sliding contact,
- the means for adjusting the length of the rod (22) are formed by the threaded nut (26), which receive a corresponding threaded axial part of the rod (22), and by a means (30) for the rod (22) to be gripped by the user to move the latter in rotation on itself,
- the end member (6) is housed in the recess (10) of the end part (2) and the means (30) for gripping the rod (22) are arranged at the end of the latter beyond the articulation axis (26) of the rod (22) on the lever (18), gripping of the rod (22) by the user being possible from the outside of the end part (2) when the lever (18) is in the open position.

5. Device according to any one of the foregoing claims, **characterized in that** the connecting means between the end member (6) and the end part (2) are formed by an at least partial complementary conformation between the end member (6) and the recess (10) of the end part (2) for engagement thereof in close contact, conformation which comprises at least one overlap (20) forming a stop against the tension exerted by the latching means (14, 16, 58).

6. Device according to any one of the foregoing claims, **characterized in that** the connecting means between the receiving part (4) and the receiving member (8) comprise a plug (38) passing through both of the latter elements, the plug (38) extending through a shank (40, 42) of the receiving member (8) which is organized as jaws (40) of a clamp, the branches (44) whereof are articulated (46) on the receiving member (8) between the distal end of the branches (44) that supports a respective jaw (40) and the proximal end of the branches (44) comprising means (48, 50, 54) for operation thereof, the proximal end of the branches (44) being arranged at a part of the receiving member (8) provided to emerge out of the recess (12) of the receiving part (4) that houses said member, in such a way that the jaws (40) can either be folded back for the receiving member (8) to be inserted in the corresponding housing (12) of the receiving part (4) without forming an obstacle preventing the plug (38) from passing between them or be folded together to form the shank (40, 42) around the plug (38).

7. Device according to claim 6, **characterized in that** the jaws (40) are guided between the folded back position and the folded together position by means of a member (42) shaped as a portion of a cylinder, called the guide, which is a participating element of the shank (40, 42) and which comprises guiding means (56) along which the jaws (40) run following a path in the form of an arc of a circle centered on the axis of the shank (40, 42), in such a way that the shank (40, 42) is shaped as a cylinder in the folded together position of the jaws (40) being composed by the assembly comprising the jaws (40) and the guide (42).

8. Device according to claim 7, **characterized in that** the operating means of the branches (44) are formed by a screw (54) mounted rotating on the receiving part (4), screw which receives in co-operant manner the proximal ends (52) of the branches (44) for the purposes, alternatively, of moving them towards one another or away from one another so that action on the screw (54) causes the jaws (40, 42) to be folded back and folded together.

9. Device according to claim 7, **characterized in that** the operating means of the branches (44) comprise a flexible means (50) for spontaneous securing of the branches (44) in the folded together position of the jaws (40), and means (48) for gripping the proximal ends of the branches (44) for the purposes of operation thereof by the user against the tension exerted by the flexible means (50) on the branches (44), so that folding back of the jaws (40) is caused by the user when the receiving member (8) is fitted in the recess (12) of the receiving part (4) and folding together of the jaws (40) is spontaneous.

## Patentansprüche

1. Vorrichtung zur mechanischen Verbindung zweier Stücke (2, 4), die das eine Ende eines Stücks (2) dieser Stücke, das sogenannte Ansatzstück, mit einer der Seiten des anderen Stücks (4), dem sogenannten Aufnahmestück, verbinden soll, welche Vorrichtung umfasst:
- zwei zusammenwirkende Elemente (6, 8), die dazu bestimmt sind, zumindest teilweise in einer Aussparung (10, 12) eines entsprechenden Stücks aufgenommen zu werden, mit dem sie durch Verbindungselemente (38, 40, 42; 10, 20) fest verbunden werden können, wobei die zusammenwirkenden Elemente jeweils Ansatzelement (6) bzw. Aufnahmeelement (8) genannt werden,
- Mittel zum einhaken eines Hakens (14), der sich am Ansatzelement (6) befindet, unter Spannung mit einem Einfasselement (16, 58) am Aufnahmeelement (8),
- der Haken (14) ist mit dem Ansatzelement (6) über Mittel (18, 22) verbunden, welche die Hakenverbindung unter Spannung setzen sollen zwischen zwei Stellungen, nämlich einer Offnungs- und einer Verriegelungsstellung, um das Stück des Ansatzelements (6) und das des Aufnahmeelements (8) einander anzunähern, wenn der Haken (14) in Eingriff mit dem Einfasselement (16, 58) steht,
- wenn Ansatzelement (6) und Aufnahmeelement (8) fest mit dem Stück (2, 4) verbunden sind, werden das Ansatzstück (2) und das Aufnahmestück (4) in Öffnungsstellung in geringem Abstand voneinander und in Verriegelungsstellung starr aneinander anliegend angeordnet, wobei die Aussparung (10) des Ansatzstücks (2) an einer ihrer Seitenflächen offen ist, um einen Zugang zu den Mitteln zum Unter-Spannungs-Setzen (18) der Hakenverbindung durch den Benutzer von außen zu ermöglichen,
Vorrichtung, **dadurch gekennzeichnet, dass** die Mittel zum Einhaken unter Spannung Mittel (22, 28, 30) zur Regulierung der Spannung umfassen, die von dem Haken (14) auf die Einfasselement (16, 58) ausgeübt wird, wobei diese Regulierungsmittel von außerhalb des Ansatzstücks (2) aus zugänglich sind, wenn in diesem das Ansatzelement (6) durch die Aussparung (10) hindurch aufgenommen ist, die letzteres aufnimmt.

2. Verbindungsvorrichtung nach Anspruch 1, **dadurch gekennzeichnet, dass** die Mittel zum Verhaken unter Spannung aus einer Befestigung mit Kniehebel besteht, die den Haken (14) umfasst, der an einen Betätigungshebel (18) angelenkt (24) ist, der selbst einerseits an einen Finger angelenkt (24) ist, der entlang einer Seitenwand des Ansatzelements (6) gleitend montiert ist, und andererseits mit diesem (6) über eine Stange (22) verbunden ist, die nahe seiner Enden jeweils an den Hebel (18) und das Ansatzelement (6) angelenkt (26, 28) ist.

3. Vorrichtung nach einem der Ansprüche 1 und 2, **dadurch gekennzeichnet, dass** die Regulierungsmittel für die unter Spannung stehenden Mittel zum Verhaken aus Mitteln zum Einstellen (22, 30, 28) der Länge der Stange (22) zwischen ihren Anlenkachsen (26, 28) um den Hebel (18) bzw. das Ansatzelement (6) bestehen.

4. Vorrichtung nach Anspruch 3, **dadurch gekennzeichnet, dass**
- die Stange (22) um eines der Elemente geschwenkt wird, die den Hebel (18) und das Ansatzelement (6) umfassen, und zwar mittels eines gewindeten Querstücks (26), der quer zu dieser verläuft, und am anderen Element mittels eines Querstitcks (28), der die Stange (22) quer in Gleitkontakt aufnimmt,
- die Mittel zum Einstellen der Länge der Stange (22) aus dem gewindeten Querstück (26), der einen entsprechenden axialen, gewindeten Teil der Stange (22) aufnimmt, und einem Element (30) zum Fassen der Stange (22) durch den Benutzer zu deren Drehantrieb um sich selbst bestehen,
- das Ansatzelement (6) in der Aussparung (10) des Ansatzstücks (2) angeordnet ist, und das Element (30) zum Fassen der Stange (22) am Ende derselben jenseits der Schwenkachse (26) der Stange (22) am Hebel (18) angeordnet ist, wobei das Fassen der Stange (22) durch den Benutzer von außerhalb des Ansatzstücks (2) möglich ist, wenn der Hebel (18) in Öffnungsstellung ist.

5. Vorrichtung nach einem der vorstehenden Ansprüche, **dadurch gekennzeichnet, dass** die Mittel zur Verbindung des Ansatzelements (6) und des Ansatzstücks (2) durch eine komplementäre, zumindest teilweise Ausgestaltung zwischen dem Ansatzelement (6) und der Aussparung (10) des Ansatzstücks (2) dazu vorgesehen sind, eng ineinander eingefügt zu werden, eine Ausgestaltung, die mindestens einen überstehenden Bereich (20) umfasst, der gegen die von den Verhakungsmitteln (14, 16, 58) ausgeübte Kraft einen Anschlag bildet.

6. Vorrichtung nach einem der vorstehenden Ansprüche, **dadurch gekennzeichnet, dass** die Verbindungsmittel zwischen dem Aufnahmestück (4) und dem Aufnahmeelement (8) einen Bolzen (38) umfassen, der durch sie zusammen geführt ist, wobei der Bolzen (38) sich durch einen Schaft (40, 42) des Aufnahmeelements (8) hindurch erstreckt, der als Klemmbacken (40) einer Klemme vorgesehen ist, deren Arme (44) um das Aufnahmeelement (8) herum zwischen dem entferntesten Ende der Arme (44) angelenkt (46) sind, das eine entsprechende Klemmbacke (40) trägt, und dem am nächsten gelegenen Ende der Arme (44), das Mittel (48, 50, 54) zu ihrer Betätigung trägt; wobei das nächst gelegene Ende der Arme (44) an einem Teil des Aufnahmeelements (8) angeordnet ist, das vorgesehen ist, aus der entsprechenden Aussparung (12) des Aufnahmestücks (4), in der diese vorgesehen ist, herauszustehen, in der Weise, dass die Klemmbacken (40) zum Einführen des Aufnahmeelements (8) in die entsprechende Aufnahme (12) des Aufnahmestücks (4) entweder winkelförmig umgebogen werden können, ohne das Hindurchgleiten des Bolzens (38) zwischen ihnen zu stören, oder entfaltet werden können, um den Schaft (40, 42) um den Bolzen herum (38) anzupassen.

7. Vorrichtung nach Anspruch 6, **dadurch gekennzeichnet, dass** die Klemmbacken (40) zwischen der umgebogenen und der entfalteten Stellungen mittels eines Elements (42) geführt werden, das als Zylinderportion ausgebildet ist und Führung genannt wird, zum Schaft (40, 42) gehört und Führungselemente (56) aufweist, entlang derer sich die Klemmbacken (40) auf einer kreisbogenförmigen Bahn bewegen, die auf die Achse des Schafts (40, 42) zentriert ist, in der Weise, dass der Schaft (40, 42) in entfalteter Position der Klemmbacken (40) als Zylinder ausgebildet ist, der aus der Einheit aus Klemmbacken (40) und Führung (42) gebildet wird.

8. Vorrichtung nach Anspruch 7, **dadurch gekennzeichnet, dass** die Mittel zum Betätigen der Arme (44) aus einer Schraube (54) bestehen, die drehbar an dem Aufnahmeelement (4) montiert ist, einer Schraube, die in zusammenwirkender Weise die einander am nächsten befindlichen Enden (52) der Arme (44) aufnimmt, und zwar abwechselnd im Hinblick auf ihre Annäherung bzw. Entfernung voneinander, sodass eine Betätigung der Schraube (54) das Umbiegen oder Entfalten der Klemmbacken (40, 42) bewirkt.

9. Vorrichtung nach Anspruch 7, **dadurch gekennzeichnet, dass** die Mittel zur Betätigung der Arme (44) ein elastisches Element (50) zum selbsttätigen Halten der Arme (44) in entfalteter Stellung der Klemmbacken (40) sowie Mittel (48) zum Greifen der am nächsten zueinander gelegenen Enden der Arme (44) im Hinblick auf ihre Betätigung durch den Benutzer entgegen der von dem elastischen Element (50) auf die Arme (44) ausgeübten Kraft umfassen, sodass das Umbiegen der Klemmbacken (40) vom Benutzer beim Einführen des Aufnahmeelements (8) in die Aussparung (12) des Aufnahmestücks (4) bewirkt wird und das Ausbreiten der Klemmbacken (40) selbsttätig erfolgt.
